(19)

**Europäisches Patentamt**
**European Patent Office**
**Office européen des brevets**

(11) **EP 4 603 276 A1**

(12) **EUROPEAN PATENT APPLICATION**

(43) Date of publication:
**20.08.2025 Bulletin 2025/34**

(21) Application number: **25153008.5**

(22) Date of filing: **21.01.2025**

(51) International Patent Classification (IPC):
**B32B 15/14** *(2006.01)* **H01M 50/124** *(2021.01)*
**H01M 50/231** *(2021.01)* **B32B 5/26** *(2006.01)*
**B32B 15/20** *(2006.01)* **C08J 5/24** *(2006.01)*

(52) Cooperative Patent Classification (CPC):
**B32B 15/14; C08J 5/0405; C08J 5/042;**
**C08J 5/043; C08J 5/046; H01M 50/124;**
**H01M 50/231;** B32B 5/26; B32B 15/20;
B32B 2260/046; B32B 2262/101; B32B 2262/106;
B32B 2307/7376; B32B 2457/10; C08J 2323/12

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **14.02.2024 KR 20240021165**

(71) Applicants:
• **SK innovation Co., Ltd.**
**Seoul 03188 (KR)**
• **SK Geo Centric Co., Ltd.**
**Seoul 03188 (KR)**

(72) Inventors:
• **SEO, Jung Hwan**
**34124 Daejeon (KR)**

• **SONG, Kang Hyun**
**34124 Daejeon (KR)**
• **AHN, Seung Hyun**
**34124 Daejeon (KR)**
• **JOO, Won Chul**
**34124 Daejeon (KR)**
• **KIM, Sang Hee**
**34124 Daejeon (KR)**
• **KIM, Hyung Bin**
**34124 Daejeon (KR)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

(54) **COMPOSITE LAMINATE**

(57) A composite laminate according to embodiments of the present disclosure includes a unidirectional tape layer including a thermoplastic resin and continuous fibers, and a first metal layer formed on the unidirectional tape layer. A content of the continuous fibers is 40 wt% or more based on the total weight of the unidirectional tape layer. The flame resistance and lightness of the composite laminate may be improved.

**EP 4 603 276 A1**

**Description**

CROSS-REFERENCE TO RELATED APPLICATIONS

This application claims priority under 35 U.S.C. §119 to Korean Patent Application No. 10-2024-0021165, filed on February 14, 2024, the disclosure of which is incorporated herein by reference in its entirety.

BACKGROUND

1. Field of the Invention

The embodiments of the present disclosure relate to a composite laminate such as a flame retardant laminate, and more specifically, to a composite laminate including a metal layer.

2. Description of the Related Art

A metal-plastic composite material is used in an automobile field. In the case of a metal material such as steel and aluminum, it has stability against heat but is highly corrosive. In addition, in the case of steel, it is heavy such that weight reduction for improving fuel efficiency is required.

Significant research and development efforts on a composite material such as a flame retardant material are being conducted to replace the metal, and the composite material known in the art includes a unidirectional (UD) tape, carbon fiber-reinforced plastic (CFRP), glass fiber-reinforced plastic (GFRP) and the like. The composite material (e.g., UD tape, CFRP, etc.) is light and corrosion resistant, but its shape may be limited due to low elongation.

Recently, significant research and developments are conducted on eco-friendly automobiles such as electric or hybrid vehicles, however, the above-described problems also exist in the electric vehicle. In the case of the electric vehicle, a battery pack including a plurality of secondary batteries accounts for a large proportion of the vehicle weight, such that weight reduction of the battery pack is required. In addition, when the plurality of secondary batteries is included in the vehicle, heat generation due to leakage of an electrolyte, gas generation, etc. occurs in series, thereby increasing the risk of explosion. Therefore, a material with reduced weight while having stability is highly desirable.

SUMMARY

Embodiments of the present disclosure provide a composite laminate having improved stability.

Another embodiment of the present disclosure provides a battery case having improved stability.

Further, another embodiment of the present disclosure provides a battery assembly having improved stability.

According to embodiments of the present disclosure, there is provided a composite laminate including a unidirectional tape layer which includes a thermoplastic resin and continuous fibers; and a first metal layer formed on the unidirectional tape layer. A content of the continuous fibers is 40% by weight or more based on a total weight of the unidirectional tape layer.

According to embodiments of the present disclosure, the composite laminate may further include a second metal layer formed on a lower surface of the unidirectional tape layer.

According to embodiments of the present disclosure, the content of the continuous fibers may be 60% by weight or more based on the total weight of the unidirectional tape layer.

According to embodiments of the present disclosure, the thermoplastic resin may further include a flame retardant.

According to embodiments of the present disclosure, the continuous fibers may include one or more selected from the group consisting of carbon fibers, glass fibers and polypropylene fibers.

According to embodiments of the present disclosure, the unidirectional tape layer may include a plurality of continuous fiber layers including continuous fibers impregnated with the thermoplastic resin, and the unidirectional tape layer may include 2 layers or more of the continuous fiber layers.

According to embodiments of the present disclosure, the unidirectional tape layer may include 7 layers or less of the continuous fiber layers.

According to embodiments of the present disclosure, the unidirectional tape layer may have a thickness of 0.4 mm or more and 3.5 mm or less.

According to embodiments of the present disclosure, the first metal layer may be formed of one or more selected from the group consisting of aluminum, steel and an alloy thereof

According to embodiments of the present disclosure, the second metal layer may be formed of the same metal as the first metal layer.

According to embodiments of the present disclosure, an adhesive layer may be formed between the unidirectional tape layer and the metal layer. The adhesive layer may include a polyolefin adhesive or a polypropylene adhesive.

According to embodiments of the present disclosure, a plurality of unidirectional tape layers and a plurality of metal layers may be sequentially and alternately formed on top of each other with optional adhesive layers included between the unidirectional tape layers and the metal layers. The metal layers may be included in an odd number within the composite laminate. The first main surface of the composite laminate may be formed by one of the metal layers and a second main surface of the composite laminate opposite to the first main surface may be formed by one of the unidirectional tape layers.

According to embodiments of the present disclosure, the second metal layer may have a thickness of 0.05 mm to 1.2 mm.

In addition, there is provided a battery case including the composite laminate according to the embodiments of the present disclosure.

Further, there is provided a battery assembly including a plurality of battery cells laminated on top of each other; and the battery case which is formed to surround at least a portion of the plurality of laminated battery cells, and includes the composite laminate according to the above-described embodiment.

Through the corrosion resistance and flame resistance of the composite laminate according to the above-described embodiments, the stability of the battery may be improved, and flame spread due to damage to the battery may be prevented.

According to embodiments of the present disclosure, the composite laminate may include continuous fibers in a predetermined content range. As the content of the continuous fibers is covered by the predetermined range, the flame resistance of the composite laminate may be improved.

According to embodiments of the present disclosure, a thickness of each layer included in the composite laminate may be adjusted, and thereby both the weight reduction and flame resistance of the composite laminate may be achieved simultaneously.

BRIEF DESCRIPTION OF THE DRAWINGS

The above and other objectives, features and advantages of the present invention will be more clearly understood by those with ordinary skill in the art from the following detailed description taken in conjunction with the accompanying drawings, in which:

FIGS. 1 to 5 are schematic cross-sectional views illustrating composite laminates according to embodiments of the present disclosure;

FIGS. 6A and 6B are schematic views illustrating unidirectional tape layers of the composite laminate according to embodiments of the present disclosure;

FIG. 7 is a schematic perspective view illustrating a battery assembly including the composite laminate according to embodiments of the present disclosure;

FIGS. 8A to 8C are schematic cross-sectional views illustrating a laminating sequence of the composite laminate according to embodiments of the present disclosure; and

FIG. 9 is a schematic view illustrating a method of manufacturing a composite laminate according to embodiments of the present disclosure.

DETAILED DESCRIPTION

Embodiments of the present disclosure are directed to a composite laminate including at least one unidirectional tape layer and at least one metal layer. Also embodiments of the present disclosure are directed to a battery case and a battery assembly including the composite laminate.

Embodiments of the present disclosure are described in more detail in conjunction with the accompanying drawings.

The terms "upper portion," "upper layer," "lower portion," "lower layer," etc. used herein are not indicative of an absolute position, but are used in a relative sense to designate different areas in relation to a specific reference plane.

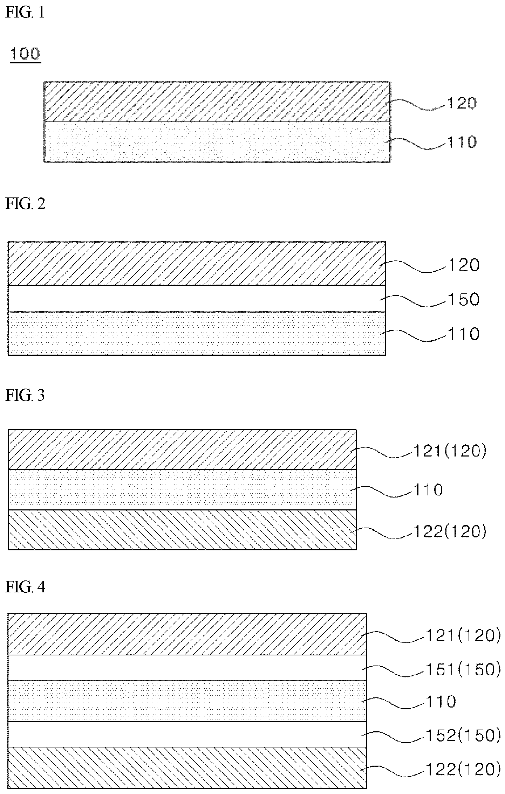

FIGS. 1 to 5 are schematic cross-sectional views illustrating composite laminates according to embodiments of the present disclosure.

Referring to FIGS. 1 and 2, the composite laminate 100 may include a unidirectional tape layer 110 and a metal layer 120 formed on the unidirectional tape layer 110. As shown in FIG. 2, the composite laminate 100 may further include an adhesive layer 150 formed between the unidirectional tape layer 110 and the metal layer 120.

Referring to FIGS. 3 and 4, the composite laminate 100 may include the unidirectional tape layer 110, a first metal layer 121 formed on an upper surface of the unidirectional tape layer and a second metal layer 122 formed on a lower surface of the unidirectional tape layer 110. As shown in FIG. 4, the composite laminate 100 may further include adhesive layers 150. The adhesive layers 150 may include a first adhesive layer 151 disposed between the unidirectional tape layer 110 and the first metal layer 121 and a second adhesive layer 152 disposed between the unidirectional tape layer 110 and the second metal layer 122.

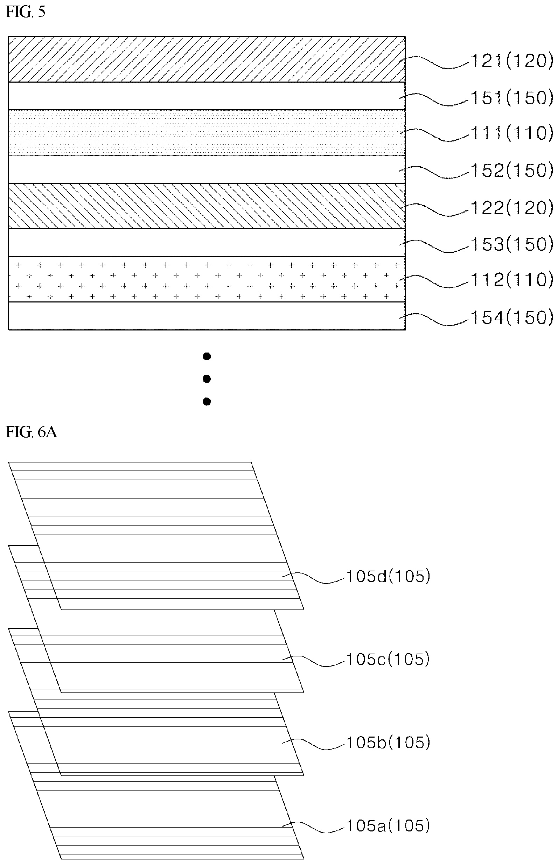

Referring to FIG. 5, the composite laminate 100 may include two or more unidirectional tape layers 110 and two or more metal layers 120. For example, the first adhesive layer 151 and the first metal layer 121 may be formed on an upper surface of a first unidirectional tape layer 111, and the second adhesive layer 152 and the second metal layer 122 may be formed on a lower surface of the first unidirectional tape layer 111. A third adhesive layer 153 and a second unidirectional tape layer 112 may be formed on a lower surface of the second metal layer. For example, the unidirectional tape layers 110 and the metal layers 120 may be sequentially and alternately laminated, and the adhesive layers 150 may be included between the unidirectional tape layers 110 and the metal layers 120.

For example, the composite laminate 100 may include two or more unidirectional tape layers 110 and two or more metal layers 120, wherein the thickness of each layer may be adjusted. Accordingly, even if the composite laminate 100 is formed into a multilayer structure, the thickness or weight thereof may be included in a predetermined range.

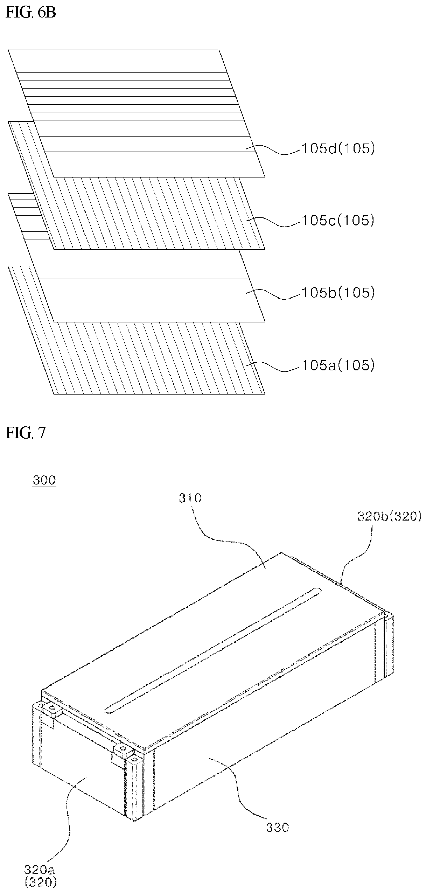

FIGS. 6A and 6B are schematic views illustrating unidirectional tape layers of the composite laminate according to embodiments of the present disclosure.

Referring to FIGS. 6A and 6B, the unidirectional tape layer 110 may include two or more continuous fiber layers 105.

According to embodiments of the present disclosure, the unidirectional tape layer 110 may include a thermoplastic resin and continuous fibers oriented in one direction. For example, the continuous fibers may be impregnated into a thermoplastic resin by determining orientations thereof to prepare the continuous fiber layers 105, and the continuous fiber layers 105 may be sequentially laminated by determining the orientations thereof to prepare the unidirectional tape layer 110.

According to embodiments of the present disclosure, the unidirectional tape layer 110 may include a thermoplastic resin. The unidirectional tape layer 110 including the thermoplastic resin may be bonded with the metal layer 120 under relatively low temperature and pressure conditions. In addition, physical properties of the unidirectional tape layer 110 may be adjusted depending on the content of the thermoplastic resin included in the unidirectional tape layer 110.

For example, the thermoplastic resin may include polypropylene (PP), high density polyethylene (HDPE), polyethylene terephthalate (PET), polymethyl methacrylate (PMMA), thermoplastic polyurethane (TPU), acrylonitrile butadiene styrene (ABS), polycarbonate (PC), polyphenylene sulfide (PPS), polyamide (PA), and the like.

In one embodiment, the thermoplastic resin may include polypropylene.

According to embodiments of the present disclosure, the thermoplastic resin may include polypropylene, and the polypropylene may be included in an amount of 60% by weight ("wt%") or less based on a total weight of the unidirectional tape layer 110.

In one embodiment, the polypropylene may be included in an amount of 60 wt% or less, 50 wt% or less but 10 wt% or more, 50 wt% or less but 20 wt% or more, or 40 wt% or less but 20 wt% or more based on the total weight of the unidirectional tape layer 110.

Within the above range, a composite laminate with reduced weight may be implemented.

According to embodiments of the present disclosure, the thermoplastic resin may further include a flame retardant. For example, the thermoplastic resin may include polypropylene and a flame retardant.

For example, the flame retardant may include a phosphorus-based flame retardant, a boron-based flame retardant, a magnesium-based flame retardant, an aluminum-based flame retardant, a nitrogen-based flame retardant, an antimony-based flame retardant, a halogen-based flame retardant, a non-halogen-based flame retardant, etc. In some embodiments, the flame retardant may include the phosphorus-based flame retardant.

According to embodiments of the present disclosure, the flame retardant may be included in an amount of 15 wt% to 45 wt% based on the total weight of the thermoplastic resin. In one embodiment, the flame retardant may be included in an amount of 20 wt% to 40 wt%, or 25 wt% to 35 wt% based on the total weight of the thermoplastic resin. Within the above range, the flame retardancy of the thermoplastic resin may be improved. Accordingly, the flame resistance of the composite laminate may be improved.

According to embodiments of the present disclosure, the unidirectional tape layer 110 may include two or more continuous fiber layers 105 which include continuous fibers oriented in one direction and are laminated on top of each other. Depending on the orientation of the continuous fiber layers 105, the physical properties of the unidirectional tape layer 110 may be partially adjusted.

According to embodiments of the present disclosure, the unidirectional tape layer 110 may include continuous fibers oriented in one direction in an amount of 40 wt% or more, 50 wt% or more, 60 wt% or more, or 60 wt% or more and 90 wt% or less based on the total weight of the unidirectional tape layer 110.

Within the above weight range, the flame resistance of the composite laminate may be improved and elongation characteristics and bending characteristics thereof may be improved. For example, if the content of the continuous fibers is less than the above content range, flame interruption performance of the composite laminate may be reduced, thereby resulting in the collapse of a structure or an occurrence of a hole due to the flame, and thus, the thermal runaway suppression of the secondary battery may not be implemented.

The content of the continuous fibers may be a sum total of the weights of the continuous fibers included in the continuous fiber layers 105.

The content of the continuous fibers may be adjusted according to a design process of the unidirectional tape layer. For example, continuous fibers may be spread in an impregnation die in one direction or in multiple directions, then a thermoplastic resin may be supplied from an upper or lower portion of the die to impregnate the continuous fibers, and the unidirectional tape layer 110 may be formed through the impregnation. Alternatively, continuous fibers may be supplied to the thermoplastic resin in one direction or in multiple directions to impregnate the continuous fibers, and the unidirectional tape layer 110 may be formed via the impregnation. The content of the continuous fibers may be adjusted to the above range by controlling a supply speed of the continuous fibers or the thermoplastic resin, an impregnation speed, an impregnation temperature and the like.

According to embodiments of the present disclosure, the continuous fibers of the continuous fiber layers 105 may include one or more of carbon fibers, glass fibers and polypropylene fibers.

According to embodiments of the present disclosure, a single strand of the continuous fiber may have a cross-sectional diameter of 10 $\mu$m to 30 $\mu$m. For example, the single strand of the continuous fiber may have a cross-sectional diameter of 12 $\mu$m to 18 $\mu$m, 14 $\mu$m to 17 $\mu$m, or 15 $\mu$m to 17 $\mu$m.

Within the above range, the content of the continuous fibers in the unidirectional tape layer 110 may be increased.

For example, as shown in FIG. 6A, the unidirectional tape layer 110 may include continuous fiber layers arranged parallel to the continuous fiber arrangement of a first continuous fiber layer 105a. For example, a second continuous fiber layer 105b arranged parallel to the continuous fiber arrangement of the first continuous fiber layer 105a may be laminated on the first continuous fiber layer 105a. A third continuous fiber layer 105c arranged parallel to the continuous fiber arrangement of the first continuous fiber layer 105a may be laminated on the second continuous fiber layer 105b. A fourth continuous fiber layer 105d arranged parallel to the continuous fiber arrangement of the first continuous fiber layer 105a may be laminated on the third continuous fiber layer 105c.

For example, as shown in FIG. 6B, the unidirectional tape layer 110 may include continuous fiber layers arranged perpendicular to the continuous fiber arrangement of the first continuous fiber layer 105a. For example, the second continuous fiber layer 105b arranged perpendicular to the continuous fiber arrangement of the first continuous fiber layer 105a may be laminated on the first continuous fiber layer 105a. The third continuous fiber layer 105c arranged parallel to the continuous fiber arrangement of the first continuous fiber layer 105a may be laminated on the second continuous fiber layer 105b. The fourth continuous fiber layer 105d arranged perpendicular to the continuous fiber arrangement of the first continuous fiber layer 105a may be laminated on the third continuous fiber layer 105c.

The arrangement and lamination structure of the continuous fiber layers are not limited to the above descriptions, and continuous fiber layers which form predetermined angle, for example, 0°, 45°, 90°, 135°, 180°, etc., with the arrangement of the continuous fibers included in the first continuous fiber layer 105a may be laminated.

According to embodiments of the present disclosure, the unidirectional tape layer 110 may include 10 layers or less of the continuous fiber layers 105. In some embodiments, the unidirectional tape layer 110 may include 7 layers or less of the continuous fiber layers 105.

For example, the unidirectional tape layer 110 may include 3 to 7 layers of the continuous fiber layers 105. However, the number of layers of the continuous fiber layers 105 is described as an example, and the number may be adjusted depending on the desired characteristics. For example, the thickness of the continuous fiber layers may be adjusted so that the unidirectional tape layer 110 may include 8 layers or more of the continuous fiber layers.

According to embodiments of the present disclosure, the unidirectional tape layer 110 may have a thickness of 0.4 mm to 3.5 mm.

According to embodiments of the present disclosure, the unidirectional tape layer 110 may have a thickness of 0.4 mm to 3.3 mm, 0.5 mm to 3.2 mm, 0.5 mm to 3.0 mm, 0.55 mm to 2.8 mm, or 0.55 mm to 2.4 mm.

Within the above range, the weight of the composite laminate 100 may be reduced while securing the flame resistance of the composite laminate 100. For example, if the thickness of the unidirectional tape layer 110 exceeds the above range, the weight thereof is increased such that the weight reduction of the composite laminate 100 may not be implemented, and if the thickness of the unidirectional tape layer 110 is less than the above range, the flame resistance of the composite laminate 100 may not be secured.

The metal layer 120 may include aluminum, steel, magnesium, titanium and the like.

According to embodiments of the present disclosure, the metal layer 120 may include one or more of aluminum, steel and an alloy thereof

According to embodiments of the present disclosure, the metal layer 120 may have a thickness of 0.05 mm to 1.2 mm.

According to embodiments of the present disclosure, the metal layer 120 may have a thickness of 0.08 mm to 1.1 mm, 0.1 mm to 1.1 mm, 0.1 mm to 1.05 mm, or 0.1 mm to 1.0 mm. In some embodiments, the metal layer 120 may have a thickness of 0.15 mm to 1.0 mm, 0.15 mm to 1.0 mm, or 0.2 mm to 1.0 mm.

Within the above thickness range, the weight of the composite laminate may be reduced. For example, if the thickness of the metal layer 120 exceeds the above range, the weight thereof is increased such that the weight reduction of the composite laminate 100 may not be implemented. For example, if the thickness of the metal layer 120 is less than the above range, the flame resistance may not be implemented even by repeatedly laminating the metal layers 120 and the unidirectional tape layers 110.

The thickness of the unidirectional tape layer 110 and the thickness of the metal layer 120 may be adjusted to some extent depending on the structure of the composite laminate. For example, as shown in FIG. 5, when the composite laminate includes two or more unidirectional tape layers 110 or three or more metal layers 120, the thickness of each unidirectional tape layer 110 and each metal layer 120 may be adjusted within a range that is small enough to reduce the weight of the composite laminate. The thickness of each unidirectional tape layer 110 and each metal layer 120 may be adjusted within the thickness range of each layer.

According to embodiments of the present disclosure, the composite laminate 100 may include the unidirectional tape layer 110, the first metal layer 121 formed on an upper surface of the unidirectional tape layer 110, and the second metal layer 122 formed on a lower surface of the unidirectional tape layer 110.

According to embodiments of the present disclosure, the first metal layer 121 and the second metal layer 122 may include the same metal.

For example, when the first metal layer 121 includes steel, the second metal layer 122 may also include steel, and when the first metal layer 121 includes aluminum, the second metal layer 122 may also include aluminum.

According to embodiments of the present disclosure, the composite laminate 100 may include the unidirectional tape layer 110, a first aluminum metal layer formed on the upper surface of the unidirectional tape layer 110, and a second aluminum metal layer formed on the lower surface of the unidirectional tape layer 110.

For example, when the composite laminate 100 includes the first aluminum metal layer and the second aluminum metal layer, the thicknesses of the first aluminum metal layer and the second aluminum metal layer may be 0.2 mm to 0.4 mm, respectively. In this case, the thickness of the unidirectional tape layer 110 may be 0.8 mm to 1.6 mm.

According to embodiments of the present disclosure, when the metal layer 120 includes steel, the laminate may not include the second metal layer 122. For example, when the composite laminate 100 includes the first steel metal layer, the thickness of the first steel metal layer may be 0.2 mm to 0.4 mm. In this case, the thickness of the unidirectional tape layer 110 may be 0.8 mm to 1.6 mm.

For example, a value according to Equation 1 below, of the composite laminate 100 may be 5% or more.

$$\text{Equation 1: } B\text{-}A/B * 100$$

In Equation 1 above, B is a weight of steel with a thickness of 0.6 mm, and A is a weight of the composite laminate.

In Equation 1 above, the weights of the steel and the composite laminate are measured based on the same width and the same length.

For example, the value according to Equation 1 of the composite laminate 100 may be 10 wt% or more. The value according to Equation 1 may be included in the above range according to the weight reduction of the composite laminate 100.

According to embodiments of the present disclosure, the composite laminate 100 may further include the adhesive layer 150 formed between the unidirectional tape layer 110 and the metal layer 120.

For example, the adhesive layer 150 may include an epoxy adhesive, an acrylic adhesive, a silicone adhesive, a polyurethane adhesive, a rubber adhesive, a polyolefin adhesive, a silica adhesive, and the like.

According to embodiments of the present disclosure, the adhesive layer 150 may include a polyolefin adhesive. For example, the adhesive layer 150 may include maleic anhydride-graft polypropylene (MAPP).

For example, when the adhesive layer 150 includes a polypropylene adhesive, the unidirectional tape layer 110 may be securely adhered to the metal layer 120 while minimizing changes in the physical properties thereof

For example, the adhesive layer 150 may have a thickness of 0.05 mm to 0.2 mm.

FIG. 7 is a schematic perspective view illustrating a battery assembly including the composite laminate according to embodiments of the present disclosure.

Referring now to FIG. 7, a battery assembly is provided that comprises the inventive composite laminate. The battery assembly may include: a plurality of stacked battery cells (not shown); and a battery case formed to surround at least a portion of the plurality of stacked battery cells. The plurality of battery cells may be stacked on top of each other or side to side.

The battery case is indicated generally by numeral 300 and may include top and bottom cover parts 310, front and rear cover parts 320 (front cover part 320a, rear cover part 320b), and side cover parts 330. The plurality of battery cells may be protected on all six sides by the cover parts 310, 320 and 330 to prevent inflow of external foreign substances and maintain structural rigidity from an external impact.

At least one of the cover parts 310, 320, and 330 that make up the battery case 300 includes the above-described composite laminate 100. In an embodiment, most or all of the cover parts 310, 320, and 330 that make up the battery case 300 include the above-described composite laminate 100. As a result the battery case 300 exhibits an improved balance of weight, and structural strength. The battery case 300 has reduced weight and the same or improved strength capable to withstand mechanical stress, impacts, and vibrations without deforming or breaking. It is noted, however, that embodiments of the battery case may also have different configurations.

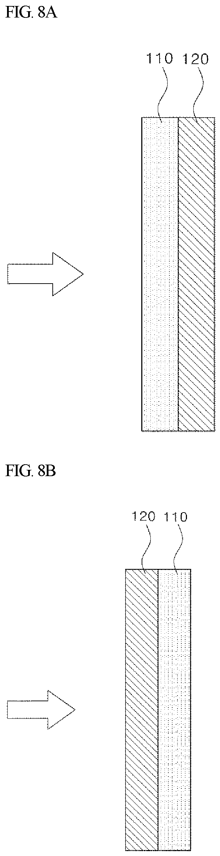

FIGS. 8A to 8C are schematic views for describing a lamination structure of the composite laminate included in the cover parts of the battery case according to embodiments of the present disclosure.

Referring to FIGS. 8A and 8B, when the composite laminate 100 includes an odd number of metal layers 120, the unidirectional tape layer 110 and the metal layer 120 may be arranged in different ways.

For example, when the metal layers 120 are included in an odd number, the directionality of the flame resistance of the composite laminate 100 may be defined. For example, the arrangement of the composite laminate 100 may vary depending on the metal type of the metal layer 120.

For example, when the metal layers 120 including steel are included in an odd number within the composite laminate 100, the unidirectional tape layer 110 may face toward the plurality of battery cells, and the metal layer 120 may face outward of the battery assembly.

For example, when the metal layers 120 including aluminum are included in an odd number within the composite laminate 100, the unidirectional tape layer 110 may face outward of the battery assembly, and the metal layers 120 may face toward the plurality of battery cells.

For example, when the metal layer 120 includes aluminum, and if a high-temperature flame is applied in a direction toward the unidirectional tape layer 110 (in the direction indicated by an arrow in FIG. 8A), only a part of the composite laminate 100 may bum or only a thickness change may occur. If the high-temperature flame is applied in a direction toward the metal layer 120 (in the direction indicated by an arrow in FIG. 8B), a hole may occur in the composite laminate 100.

For example, when the metal layer 120 includes steel, and if a high-temperature flame is applied in a direction toward the unidirectional tape layer 110 (in the direction indicated by the arrow in FIG. 8A), the unidirectional tape layer 110 may melt, thereby resulting in the collapse of the structure of the composite laminate 100. If the high-temperature flame is applied in a direction toward the metal layer 120 (in the direction indicated by the arrow in FIG. 8B), only a part of the composite laminate 100 may bum or only a change in the thickness may occur.

Accordingly, the thermal stability of the battery assembly may be secured and thermal runaway may be suppressed.

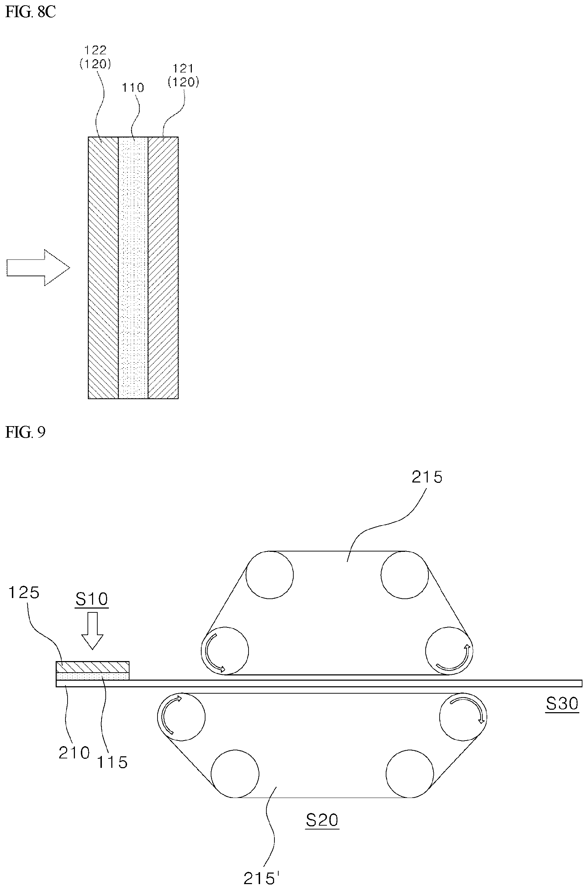

Referring to FIG. 8C, when the composite laminate 100 includes an even number of metal layers 120, the first metal layer 121 on the upper surface of the unidirectional tape layer 110 and the second metal layer 122 on the lower surface may be arranged in any direction on the cover parts independent of the orientation.

For example, the unidirectional tape layer 110 is positioned between the metal layers 120, such that if a high-temperature flame from the outside may be applied to the metal layers 120, a hole does not occur in the composite laminate, thereby the plurality of battery cells may be protected from internal and external heats.

For example, the plurality of battery cells may include a cathode, an anode facing the cathode, and a separation membrane, respectively.

The cathode may include a cathode current collector and a cathode slurry layer disposed on at least one surface of the cathode current collector.

The cathode current collector may include stainless steel, nickel, aluminum, titanium, or an alloy thereof The cathode current collector may also include aluminum or stainless steel subjected to surface treatment with carbon, nickel, titanium or silver.

The cathode slurry layer may include a cathode active material. The cathode active material may include a compound capable of reversibly intercalating and deintercalating lithium ions.

According to embodiments of the present disclosure, the cathode active material may include a lithium-nickel metal oxide. The lithium-nickel metal oxide may further include at least one of cobalt (Co), manganese (Mn) and aluminum (Al).

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The anode may include an anode current collector and an anode slurry layer disposed on at least one surface of the anode current collector.

As a non-limiting embodiment, the anode current collector may include a copper foil, a nickel foil, a stainless steel foil, a titanium foil, nickel foam, copper foam, and a polymer substrate coated with a conductive metal.

The anode slurry layer may include an anode active material. As the anode active material, a material capable of intercalating and deintercalating lithium ions may be used. For example, as the anode active material, a carbon-based material such as crystalline carbon, amorphous carbon, a carbon composite, or carbon fibers; lithium metal; a lithium alloy; a silicon (Si)-containing material or tin (Sn)-containing material; and the like may be used.

Examples of the amorphous carbon may include hard carbon, cokes, mesocarbon microbead (MCMB), mesophase pitch-based carbon fiber (MPCF) or the like.

Examples of the crystalline carbon may include graphite-based carbon such as natural graphite, artificial graphite, graphite cokes, graphite MCMB, graphite MPCF or the like.

A separation membrane may be interposed between the cathode and the anode. The separation membrane may prevent electrical short-circuit between the cathode and the anode, and maintain flow of ions.

The separation membrane may include a porous polymer film or a porous nonwoven fabric. The porous polymer film may include a polyolefin polymer such as an ethylene polymer, a propylene polymer, an ethylene/butene copolymer, an ethylene/hexene copolymer, an ethylene/methacrylate copolymer, etc. The porous nonwoven fabric may include glass fibers having a high melting point, polyethylene terephthalate fibers and the like.

The separation membrane may also include a ceramic-based material. For example, inorganic particles may be applied to the polymer film or dispersed within the polymer film to improve heat resistance.

The separation membrane may have a single-layer or multi-layer structure including the above-described polymer film and/or non-woven fabric.

FIG. 9 is a schematic view for describing a method for manufacturing a composite laminate according to embodiments of the present disclosure.

Referring to FIG. 9, a preliminary composite laminate including a preliminary unidirectional tape layer 115 and a preliminary metal layer 125 formed on the preliminary unidirectional tape layer 115 may be prepared. The preliminary composite laminate may be placed in a mold (e.g., process S10). Heat and pressure may be applied to the preliminary composite laminate through molding parts 215 and 215' (e.g., process S20). The formed preliminary composite laminate may be cooled (e.g., process S30).

According to embodiments of the present disclosure, a preliminary first metal layer 125 may be formed on an upper surface of the preliminary unidirectional tape layer 115 and a preliminary second metal layer may be formed on a lower surface of the preliminary unidirectional tape layer 115 to form a preliminary composite laminate.

The preliminary unidirectional tape layer 115 and the preliminary metal layer 125 may be the same as the above-described unidirectional tape layer 110 and the metal layer 120 except for the thickness. For example, the preliminary unidirectional tape layer 115 may include a thermoplastic resin and continuous fibers oriented in one direction.

The thickness of the preliminary unidirectional tape layer 115 may be adjusted to about 10% within the thickness range of the above-described unidirectional tape layer 110. In addition, the thickness of the preliminary metal layer 125 may be adjusted to about 10% within the thickness range of the above-described metal layer 120.

According to embodiments of the present disclosure, the laminate may further include a preliminary adhesive layer between the preliminary unidirectional tape layer 115 and the preliminary metal layer 125. The preliminary adhesive layer may be the same as the above-described adhesive layer.

According to embodiments of the present disclosure, the preliminary composite laminate may be formed at a temperature of 130°C to 170°C in the molding parts 215 and 215'.

According to embodiments of the present disclosure, the preliminary composite laminate may be formed at a pressure of 10 kPa to 300 kPa in the molding parts 215 and 215'.

For example, the preliminary unidirectional tape layer 115 may include a thermoplastic resin, such that the composite laminate may be manufactured under the relatively mild conditions of the above-described temperature and pressure ranges. Suitable examples of thermoplastic resins may include polyethylene (PE), polypropylene (PP), polyvinyl chloride (PVC), polystyrene (PS), acrylonitrile butadiene styrene (ABS), polyethylene terephthalate (PET), nylon, polycarbonate (PC) and the like, and any combinations thereof In some embodiments, the thermoplastic resin may be PE, PP, or combinations thereof

The molding parts 215 and 215' may use a device for applying heat and pressure. For example, a hand press, a roller press, etc. may be used as a molding part device. For example, the preliminary composite laminate may be formed through a calendaring process.

The preliminary unidirectional tape layer 115 and the preliminary metal layer 125 may be laminated to stack integrally through the molding part.

According to embodiments of the present disclosure, the formed preliminary composite laminate may be cooled in a range of 0°C to 30°C. The formed preliminary composite laminate may be quickly cooled in the above range of temperatures to maintain the continuous fiber arrangement of the unidirectional tape layer.

The embodiments of the present disclosure described above include the following aspects, and can be implemented through at least one of the following aspects.

According to the first aspect of a composite laminate 100 comprise a unidirectional tape layer 110 which includes a thermoplastic resin and continuous fibers; and a first metal layer 121 formed on the unidirectional tape layer 110. A content of the continuous fibers is 40% by weight or more based on a total weight of the unidirectional tape layer 110.

In the first aspect, according to the second aspect of the composite laminate 100 may further include a second metal layer 122 formed on a lower surface of the unidirectional tape layer 110.

In the first or the second aspect, according to the third aspect of the composite laminate 100, the content of the continuous fibers may be 60% by weight or more based on the total weight of the unidirectional tape layer 110.

In anyone of the first aspect to the third aspect, according to the fourth aspect of the composite laminate 100, the thermoplastic resin may further include a flame retardant.

In anyone of the first aspect to the fourth aspect, according to the fifth aspect of the composite laminate 100, the continuous fibers may include one or more selected from the group consisting of carbon fibers, glass fibers and polypropylene fibers.

In anyone of the first aspect to the fifth aspect, according to the sixth aspect of the composite laminate 100, the unidirectional tape layer 110 may include a plurality of continuous fiber layers including continuous fibers impregnated with the thermoplastic resin, and the unidirectional tape layer 110 may include 2 layers or more of the continuous fiber layers.

In the sixth aspect, according to the seventh aspect of the composite laminate 100, the unidirectional tape layer 110 may include 7 layers or less of the continuous fiber layers.

In anyone of the first aspect to the seventh aspect, according to the eighth aspect of the composite laminate 110, the unidirectional tape layer 110 may have a thickness of 0.4 mm or more and 3.5 mm or less.

In anyone of the first aspect to the eighth aspect, according to the ninth aspect of the composite laminate 100, the first metal layer 121 may be formed of one or more selected from the group consisting of aluminum, steel and an alloy thereof

In anyone of the second aspect to the ninth aspect, according to the tenth aspect of the composite laminate 100, the second metal layer 122 may be formed of the same metal as the first metal layer 121.

In anyone of the second aspect to the tenth aspect, according to the eleventh aspect of the composite laminate 100, an adhesive layer 150 may be formed between the unidirectional tape layer 110 and the metal layer 120. The adhesive layer 150 may include a polyolefin adhesive or a polypropylene adhesive.

In anyone of the second aspect to the eleventh aspect, according to the twelfth of the composite laminate 100, a plurality of unidirectional tape layers 110 and a plurality of metal layers 120 may be sequentially and alternately formed on top of each other with optional adhesive layers 150 included between the unidirectional tape layers 110 and the metal layers 120. The metal layers 120 may be included in an odd number within the composite laminate 100. The first main surface of the composite laminate 100 may be formed by one of the metal layers 120 and a second main surface of the composite laminate 100 opposite to the first main surface may be formed by one of the unidirectional tape layers 110.

In anyone of the second aspect to the twelfth aspect, according to the thirteenth aspect of the composite laminate, the second metal layer 122 may have a thickness of 0.05 mm to 1.2 mm.

According to the fourteenth aspect of the present disclosure, a battery case comprise the composite laminate according to the above-described aspects.

According to the fifteenth aspect of the present disclosure, a battery assembly comprise a plurality of battery cells laminated on top of each other; and the battery case which is formed to surround at least a portion of the plurality of laminated battery cells, and includes the composite laminate according to the above-described aspects.

Hereinafter, specific experimental examples are proposed to facilitate understanding of the embodiments the present disclosure.

## Examples and Comparative Examples

## Preparative Example. Preparation of unidirectional (UD) tape layer

## Preparative Example 1-1. Preparation of flame retardant-treated unidirectional tape layer

A flame retardant-treated polypropylene resin was prepared by adding a flame retardant (ADEKA, FR-2500S) to a polypropylene resin so that the amount of the flame retardant in the flame-retardant-treated polypropylene resin was 25 wt% to 35 wt%. The flame retardant-treated polypropylene resin was impregnated with glass fiber so that the content of the glass fiber was 60 wt% based on the total weight of the flame retardant-treated polypropylene resin with the impregnated glass fiber. The polypropylene resin impregnated with the glass fiber was laminated in 4 layers (plies) to prepare a unidirectional tape layer having a thickness of 1.1 mm.

**Preparative Example 1-2. Preparation of flame retardant-treated unidirectional tape layer**

A unidirectional tape layer was prepared by the same method as Preparative Example 1-1, except that the polypropylene resin impregnated with the glass fiber was laminated in 6 layers (plies) to change the thickness to 1.6 mm.

**Preparative Example 1-3. Preparation of flame retardant-treated unidirectional tape layer**

A unidirectional tape layer was prepared by the same method as Preparative Example 1-1, except that the glass fiber-impregnated polypropylene resin was laminated in 8 layers (plies) to change the thickness to 2.2 mm.

**Preparative Example 2. Preparation of flame retardant-treated unidirectional tape layer**

A unidirectional tape layer was prepared by the same method as Preparative Example 1-1, except that the content of the glass fiber was changed to 50 wt%.

**Preparative Example 3. Preparation of flame retardant-treated unidirectional tape layer**

A unidirectional tape layer was prepared by the same method as Preparative Example 1-1, except that the content of the glass fiber was changed to 70 wt%.

**Preparative Example 4. Preparation of non-flame retardant-treated unidirectional tape layer**

A unidirectional tape layer was prepared by the same method as Preparative Example 1-1, except that a polypropylene resin which does not include the flame retardant was used.

**Preparative Example 5. Preparation of flame retardant-treated unidirectional tape layer**

A unidirectional tape layer was prepared by the same method as Preparative Example 1-1, except that the content of the glass fiber was changed to 30 wt%.

**Example 1. Manufacture of composite laminate (1)**

A maleic anhydride-grafted polypropylene (MAPP) film having a thickness of 0.05 mm was laminated on a first metal layer including aluminum or steel, and the unidirectional tape layer according to one of Preparative Examples 1-1, 1-2, 1-3, 2, 3 or 4 was laminated on the MAPP film to form a first preliminary laminate. Thereafter, the first preliminary laminate was placed in a mold, then the layers were bonded by passing through a heating zone of 130°C to 170°C depending on the type of the unidirectional tape, and the layers were rapidly cooled by passing through a cooling zone of 30°C to manufacture a first composite laminate.

The types and thicknesses of each layer included in the first composite laminate are as shown in Table 1 below.

TABLE 1

| Item | First metal layer | | Unidirectional tape layer | |
|---|---|---|---|---|
| | Type | Thickness (mm) | Type | Thickness (mm) |
| Example 1-1 | Steel | 0.25 | Preparative Example 1-1 (4 plies) | 1.1 |
| Example 1-2 | Steel | 0.30 | | |
| Example 1-3 | Steel | 0.40 | | |
| Example 14 | Aluminum | 0.30 | | |
| Example 1-5 | Aluminum | 0.50 | | |
| Example 1-6 | Steel | 0.25 | Preparative Example 1-2 (6 plies) | 1.6 |
| Example 1-7 | Steel | 0.30 | | |
| Example 1-8 | Steel | 0.40 | | |
| Example 1-9 | Aluminum | 0.30 | | |
| Example 1-10 | Aluminum | 0.50 | | |

(continued)

| Item | First metal layer | | Unidirectional tape layer | |
|---|---|---|---|---|
| | Type | Thickness (mm) | Type | Thickness (mm) |
| Example 1-11 | Steel | 0.25 | Preparative Example 1-3 (8 plies) | 2.2 |
| Example 1-12 | Steel | 0.30 | | |
| Example 1-13 | Steel | 0.40 | | |
| Example 1-14 | Aluminum | 0.30 | | |
| Example 1-15 | Aluminum | 0.50 | | |
| Example 1-16 | Steel | 0.25 | Preparative Example 2 (4 plies) | 1.1 |
| Example 1-17 | Aluminum | 0.30 | | |
| Example 1-18 | Steel | 0.25 | Preparative Example 3 (4 plies) | 1.1 |
| Example 1-19 | Aluminum | 0.30 | | |
| Example 1-20 | Steel | 0.25 | Preparative Example 4 (4 plies) | 1.1 |
| Example 1-21 | Aluminum | 0.30 | | |

## Example 2. Manufacture of composite laminate (2)

A first preliminary laminate was formed by the same method as Example 1, and a MAPP film with a thickness of 0.05 mm and a second metal layer were sequentially laminated on the unidirectional tape layer of the first preliminary laminate to form a second preliminary laminate. Thereafter, the second preliminary laminate was placed in a mold, then the layers were bonded by passing through a heating zone of 130°C to 170°C depending on the type of the unidirectional tape, and the layers were rapidly cooled by passing through a cooling zone of 30°C to manufacture a second composite laminate.

The types and thicknesses of each layer included in the second composite laminate are as shown in Table 2 below.

TABLE 2

| Item | First metal layer | | Unidirectional tape layer | | Second metal layer | |
|---|---|---|---|---|---|---|
| | Type | Thickness (mm) | Type | Thickness (mm) | Type | Thickness (mm) |
| Example 2-1 | Steel | 0.25 | Preparative Example 1-1 (4 plies) | 1.1 | Steel | 0.25 |
| Example 2-2 | Steel | 0.30 | | | Steel | 0.30 |
| Example 2-3 | Steel | 0.40 | | | Steel | 0.40 |
| Example 2-4 | Aluminum | 0.30 | | | Aluminum | 0.30 |
| Example 2-5 | Aluminum | 0.5 | | | Aluminum | 0.5 |
| Example 2-6 | Steel | 0.25 | Preparative Example 2 (4 plies) | 1.1 | Steel | 0.25 |
| Example 2-7 | Aluminum | 0.30 | | | Aluminum | 0.30 |
| Example 2-8 | Steel | 0.25 | Preparative Example 3 (4 plies) | 1.1 | Steel | 0.25 |
| Example 2-9 | Aluminum | 0.30 | | | Aluminum | 0.30 |
| Example 2-10 | Steel | 0.25 | Preparative Example 4 (4 plies) | 1.1 | Steel | 0.25 |
| Example 2-11 | Aluminum | 0.30 | | | Aluminum | 0.30 |

## Comparative Example 1. Single metal layer

Aluminum single metal layers having thicknesses of 0.3 mm, 1.0 mm, 2.0 mm, 2.5 mm, and 3.0 mm, respectively, were manufactured.

### Comparative Example 2. Single unidirectional tape layer

A single unidirectional tape layer having a thickness of 1.1 mm was manufactured according to Preparative Examples 1-1, 2, 3 and 4.

### Comparative Example 3. Manufacture of composite laminate

A composite laminate was manufactured by the same method as Example 1, except that polytetrafluoroethylene (PTFE) was used instead of the first metal layer including the aluminum or steel.

### Comparative Example 4. Manufacture of composite laminate

A composite laminate was manufactured by the same method as Example 1, except that a unidirectional tape layer according to Preparative Example 5 was used instead of the unidirectional tape layer according to one of Preparative Examples 1-1, 1-2, 1-3, 2, 3 and 4.

The types and thicknesses of each layer included in the single metal layer, the single unidirectional tape layer or the composite laminate according to Comparative Examples 1 to 4 are as shown in Table 3 below.

TABLE 3

| Item | Metal layer or polymer layer | | Unidirectional tape layer | |
|---|---|---|---|---|
| | Type | Thickness (mm) | Type | Thickness (mm) |
| Comparative Example 1-1 | Aluminum | 0.3 | - | - |
| Comparative Example 1-2 | | 1.0 | | |
| Comparative Example 1-3 | | 2.0 | | |
| Comparative Example 1-4 | | 2.5 | | |
| Comparative Example 1-5 | | 3.0 | | |
| Comparative Example 2-1 | - | - | Preparative Example 1-1 (4 plies) | 1.1 |
| Comparative Example 2-2 | - | - | Preparative Example 2 (4 plies) | 1.1 |
| Comparative Example 2-3 | - | - | Preparative Example 3 (4 plies) | 1.1 |
| Comparative Example 2-4 | - | - | Preparative Example 4 (4 plies) | 1.1 |
| Comparative Example 3-1 | PTFE | 0.1 | Preparative Example 1-1 (4 plies) | 1.1 |
| Comparative Example 3-2 | PTFE | 0.2 | | |
| Comparative Example 3-3 | PTFE | 1.0 | | |
| Comparative Example 4-1 | Steel | 0.25 | Preparative Example 5 (4 plies) | 1.1 |
| Comparative Example 4-2 | Aluminum | 0.30 | | |

### Experimental Example

#### (1) Evaluation of flame resistance

The flame resistance of the single-layers or composite laminates according to the examples and comparative examples was evaluated.

A torch was positioned at a distance 10 cm away from the single-layer or composite laminate in a thickness direction thereof The distance of the torch to the single layer or the composite laminate was adjusted so that the temperature of the torch flame on the surface of the single-layer or the composite laminate could reach 1,100°C. Thereafter, heat was applied to the single-layer or to the composite laminate with the torch to evaluate whether or not a hole would form and record an occurrence time of the hole formation if the hole actually formed.

In the cases of the first composite laminate according to Example 1, the composite laminate according to Comparative Example 3, and the composite laminate according to Comparative Example 4, the flame resistance evaluation was performed for each state where the metal layer faced the torch and the unidirectional tape layer faced the torch.

As experimental results, flame resistance evaluation results according to the examples are shown in Table 4 below, and flame resistance evaluation results according to the comparative examples are shown in Table 5 below.

TABLE 4

| Example | | Structure | | | Hole occurrence | |
|---|---|---|---|---|---|---|
| | | Item | Type | Thickness (mm) | Occurred or not | Occurrence time |
| Example 1-1 | Heat applied to metal layer | First layer | Steel | 0.25 | X | - |
| | | Second layer | Flame retardant UD tape (4 plies) | 1.1 | | |
| | Heat applied to unidirectional tape layer | First layer | Steel | 0.25 | X | - |
| | | Second layer | Flame retardant UD tape (4 plies) | 1.1 | | |
| Example 1-4 | Heat applied to metal layer | First layer | Aluminum | 0.30 | O | 4 minutes 30 seconds |
| | | Second layer | Flame retardant UD tape (4 plies) | 1.1 | | |
| | Heat applied to unidirectional tape layer | First layer | Aluminum | 0.30 | X | - |
| | | Second layer | Flame retardant UD tape (4 plies) | 1.1 | | |
| Example 1-16 | Heat applied to metal layer | First layer | Steel | 0.25 | X | - |
| | | Second layer | Flame retardant UD tape (4 plies) | 1.1 | | |
| | Heat applied to unidirectional tape layer | First layer | Aluminum | 0.30 | X | - |
| | | Second layer | Flame retardant UD tape (4 plies) | 1.1 | | |
| Example 1-17 | Heat applied to metal layer | First layer | Steel | 0.25 | X | - |
| | | Second layer | Flame retardant UD tape (4 plies) | 1.1 | | |
| | Heat applied to unidirectional tape layer | First layer | Aluminum | 0.30 | X | - |
| | | Second layer | Flame retardant UD tape (4 plies) | 1.1 | | |

(continued)

| Example | | Structure | | | Hole occurrence | |
|---|---|---|---|---|---|---|
| | | Item | Type | Thickness (mm) | Occurred or not | Occurrence time |
| Example1 -20 | Heat applied to metal layer | First layer | Steel | 0.25 | X | - |
| | | Second layer | Non-flame retardant UD tape (4 phes) | 1.1 | | |
| | Heat applied to unidirectional tape layer | First layer | Steel | 0.25 | O | 1 minute 18 seconds |
| | | Second layer | Non-flame retardant UD tape (4 phes) | 1.1 | | |
| Example 1-21 | Heat applied to metal layer | First layer | Aluminum | 0.30 | O | 20 seconds |
| | | Second layer | Non-flame retardant UD tape (4 phes) | 1.1 | | |
| | Heat applied to unidirectional tape layer | First layer | Aluminum | 0.30 | O | 40 seconds |
| | | Second layer | Non-flame retardant UD tape (4 phes) | 1.1 | | |
| Example 2-1 | Heat applied to metal layer | First layer | Steel | 0.25 | X | - |
| | | Second layer | Flame retardant UD tape (4 plies) | 1.1 | | |
| | | Third layer | Steel | 0.25 | | |
| Example 24 | Heat applied to metal layer | First layer | Aluminum | 0.3 | X | - |
| | | Second layer | Flame retardant UD tape (4 plies) | 1.1 | | |
| | | Third layer | Aluminum | 0.3 | | |
| Example 2-10 | Heat applied to metal layer | First layer | Steel | 0.25 | X | - |
| | | Second layer | Non-flame retardant UD tape (4 phes) | 1.1 | | |
| | | Third layer | Steel | 0.25 | | |

(continued)

| Example | | Structure | | | Hole occurrence | |
|---|---|---|---|---|---|---|
| | | Item | Type | Thickness (mm) | Occurred or not | Occurrence time |
| Example 2-11 | Heat applied to metal layer | First layer | Aluminum | 0.3 | X | - |
| | | Second layer | Non-flame retardant UD tape (4 phes) | 1.1 | | |
| | | Third layer | Aluminum | 0.3 | | |

As shown in Table 4 above, in the composite laminate according to Example 1, the flame retardant evaluation results were different for the case of applying heat to the surface of the metal layer and the case of applying heat to the surface of the unidirectional (UD) tape layer.

In the case of Example 1-1 including a steel metal layer and a flame retardant-treated unidirectional tape layer, no hole occurred regardless of the type of the surface to which heat was applied.

In the case of Example 1-4 including an aluminum metal layer and a flame retardant-treated unidirectional tape layer, it was confirmed that a hole occurred within 5 minutes when heat was directly applied to the metal layer. However, when heat was directly applied to the flame retardant-treated unidirectional tape layer, no hole occurred even after 10 minutes.

In the case of Example 1-20 including a steel metal layer and a non-flame retardant-treated unidirectional tape layer, a hole occurred when heat was directly applied to the non-flame retardant-treated unidirectional tape layer, but no hole occurred when heat was directly applied to the metal layer.

In the case of Example 1-21 including an aluminum metal layer and a non-flame retardant-treated unidirectional tape layer, a hole occurred regardless of the type of the surface to which heat was applied.

It was confirmed that the composite laminate including the first metal layer, the unidirectional tape layer, and the second metal layer had significantly improved flame resistance, since no hole occurred regardless of the flame retardant treatment of the unidirectional tape layer.

TABLE 5

| Comparative Example | Structure | | | Hole occurrence | |
|---|---|---|---|---|---|
| | Item | Type | Thickness (mm) | Occurred or not | Occurrence time |
| Comparative Example 1-1 | First layer | Aluminum | 0.3 | O | 5 seconds |
| Comparative Example 1-2 | First layer | Aluminum | 1.0 | O | 18 seconds |
| Comparative Example 1-3 | First layer | Aluminum | 2.0 | O | 1 minute 20 seconds |
| Comparative Example 1-4 | First layer | Aluminum | 2.5 | O | 3 minutes 40 seconds |
| Comparative Example 1-5 | First layer | Aluminum | 3.0 | O | 4 minutes |
| Comparative Example 2-1 | First layer | Flame retardant UD tape (4plies) | 1.1 | O | 1 minute 30 seconds |
| Comparative Example 2-4 | First layer | Non-flame retardant UDtape(4plies) | 1.1 | O | 15 seconds |

(continued)

| Comparative Example | Structure | | | Hole occurrence | | |
|---|---|---|---|---|---|---|
| | Item | Type | Thickness (mm) | Occurred or not | Occurrence time | |
| **Compara tive Example 3-1** | Heat applied to metal layer | First layer | PTFE | 0.1 | O | 30 seconds |
| | | Second layer | Flame retardant UD tape (4 plies) | 1.1 | | |
| | Heat applied to unidirectional tape layer | First layer | PTFE | 0.1 | O | 1 minute |
| | | Second layer | Flame retardant UD tape (4 plies) | 1.1 | | |
| **Compara tive Example 3-2** | Heat applied to metal layer | First layer | PTFE | 0.2 | O | 1 minute 30 seconds |
| | | Second layer | Flame retardant UD tape (4 plies) | 1.1 | | |
| | Heat applied to unidirectional tape layer | First layer | PTFE | 0.1 | O | 2 minutes 30 seconds |
| | | Second layer | Flame retardant UD tape (4 plies) | 1.1 | | |
| **Compara tive Example 3-3** | Heat applied to metal layer | First layer | PTFE | 1.0 | O | 3 minutes |
| | | Second layer | Flame retardant UD tape (4 plies) | 1.1 | | |
| | Heat applied to unidirectional tape layer | First layer | PTFE | 0.1 | O | 5 minutes |
| | | Second layer | Flame retardant UD tape (4 plies) | 1.1 | | |
| **Compara tive Example 4-1** | Heat applied to metal layer | First layer | Steel | 0.25 | O | 4 minutes 30 seconds |
| | | Second layer | Flame retardant UD tape (4 plies) | 1.1 | | |
| | Heat applied to unidirectional tape layer | First layer | Steel | 0.25 | O | 1 minute 20 seconds |
| | | Second layer | Flame retardant UD tape (4 plies) | 1.1 | | |
| **Compara tive Example 4-2** | Heat applied to metal layer | First layer | Aluminum | 0.30 | O | 50 seconds |
| | | Second layer | Flame retardant UD tape (4 plies) | 1.1 | | |
| | Heat applied to unidirectional tape layer | First layer | Aluminum | 0.30 | O | 30 seconds |
| | | Second layer | Flame retardant UD tape (4 plies) | 1.1 | | |

As shown in Table 5 above, in the cases of Comparative Examples 1-1 to 1-5 corresponding to the single metal layer, the occurrence time of a hole was delayed as the thickness of the metal layer was increased, but a hole occurred even when the thickness of the metal layer corresponded to 3.0 mm or more.

In the cases of Comparative Examples 2-1 and 24 corresponding to the single unidirectional tape layer, the occurrence time of hole was delayed due to flame retardant treatment, but a hole occurred within a short period of time even after flame retardant treatment.

In the cases of Comparative Examples 3-1 to 3-3 using polytetrafluoroethylene (PTFE) instead of the metal layer, the occurrence time of hole was delayed as the thickness of PTFE was increased, but a hole occurred within 5 minutes in all cases.

In the cases of Comparative Examples 4-1 and 4-2 using the unidirectional tape layer with a low content of glass fiber, it was confirmed that the occurrence of hole was not delayed even when they corresponded to the same metal and the same thickness as the examples.

**(2) Evaluation of weight reduction rate**

The weight reduction rate of the composite laminates according to the above examples was evaluated. Based on the weight of steel of 100 mm X 100 mm X 0.6 mm, the weight reduction rate was evaluated after setting the same length and width, and the weight reduction rate was calculated according to Equation 1 below. Evaluation results are as shown in Tables 6 and 7 below.

$$\text{Equation 1: B-A/B X 100}$$

In Equation 1 above, B is a weight of the reference steel, and A is a weight of the composite laminate.

TABLE 6

| Item | | Lamination structure | | | Weight (g) | Weight reduction rate (%) |
|---|---|---|---|---|---|---|
| | | | Thickness (mm) | | | |
| | | Type | Structure thickness | Actually measured thickness | | |
| Example 1-1 | First layer | Steel | 0.25 | 1.38 | 37.1 | 20.7 |
| | Second layer | Flame retardant UD tape (4 plies) | 1.1 | | | |
| Example 1-2 | First layer | Steel | 0.30 | 1.44 | 41.0 | 12.4 |
| | Second layer | Flame retardant UD tape (4 plies) | 1.1 | | | |
| Example 1-3 | First layer | Steel | 0.40 | 1.55 | 48.8 | -4.3 |
| | Second layer | Flame retardant UD tape (4 plies) | 1.1 | | | |
| Example 1-4 | First layer | Aluminum | 0.30 | 1.40 | 25.7 | 45.1 |
| | Second layer | Flame retardant UD tape (4 plies) | 1.1 | | | |
| Example 1-5 | First layer | Aluminum | 0.50 | 1.60 | 31.1 | 33.5 |
| | Second layer | Flame retardant UD tape (4 plies) | 1.1 | | | |
| Example 1-6 | First layer | Steel | 0.25 | 1.90 | 45.1 | 3.6 |
| | Second layer | Flame retardant UD tape (6 plies) | 1.6 | | | |
| Example 1-7 | First layer | Steel | 0.30 | 1.96 | 49.0 | -4.7 |
| | Second layer | Flame retardant UD tape (6 plies) | 1.6 | | | |

(continued)

| Item | | Lamination structure | | | Weight (g) | Weight reduction rate (%) |
|---|---|---|---|---|---|---|
| | | Type | Thickness (mm) | | | |
| | | | Structure thickness | Actually measured thickness | | |
| Example 1-8 | First layer | Steel | 0.40 | 2.08 | 56.8 | -21.4 |
| | Second layer | Flame retardant UD tape (6 plies) | 1.6 | | | |
| Example 1-9 | First layer | Aluminum | 0.30 | 1.89 | 33.7 | 28.0 |
| | Second layer | Flame retardant UD tape (6 plies) | 1.6 | | | |
| Example 1-10 | First layer | Aluminum | 0.50 | 2.09 | 39.1 | 16.5 |
| | Second layer | Flame retardant UD tape (6 plies) | 1.6 | | | |
| Example 1-11 | First layer | Steel | 0.25 | 2.51 | 54.7 | -16.9 |
| | Second layer | Flame retardant UD tape (8 plies) | 2.2 | | | |
| Example 1-12 | First layer | Steel | 0.30 | 2.58 | 58.6 | -25.2 |
| | Second layer | Flame retardant UD tape (8 plies) | 2.2 | | | |
| Example 1-13 | First layer | Steel | 0.40 | 2.67 | 66.4 | 41.9 |
| | Second layer | Flame retardant UD tape (8 plies) | 2.2 | | | |
| Example 1-14 | First layer | Aluminum | 0.30 | 2.46 | 44.3 | 7.5 |
| | Second layer | Flame retardant UD tape (8 plies) | 2.2 | | | |
| Example 1-15 | First layer | Aluminum | 0.50 | 2.65 | 48.7 | -4.1 |
| | Second layer | Flame retardant UD tape (8 plies) | 2.2 | | | |
| Example 1-16 | First layer | Steel | 0.25 | 1.38 | 36.9 | 21.1 |
| | Second layer | Flame retardant UD tape (4 plies) | 1.1 | | | |
| Example 1-17 | First layer | Aluminum | 0.30 | 1.40 | 25.4 | 45.7 |
| | Second layer | Flame retardant UD tape (4 plies) | 1.1 | | | |
| Example 1-18 | First layer | Steel | 0.25 | 1.38 | 37.3 | 20.3 |
| | Second layer | Flame retardant UD tape (4 plies) | 1.1 | | | |
| Example 1-19 | First layer | Aluminum | 0.30 | 1.40 | 26.0 | 44.4 |
| | Second layer | Flame retardant UD tape (4 plies) | 1.1 | | | |
| Example 1-20 | First layer | Steel | 0.25 | 1.38 | 36.8 | 21.3 |
| | Second layer | Flame retardant UD tape (4 plies) | 1.1 | | | |

(continued)

| Item | | Lamination structure | | | Weight (g) | Weight reduction rate (%) |
|---|---|---|---|---|---|---|
| | | Type | Thickness (mm) | | | |
| | | | Structure thickness | Actually measured thickness | | |
| Example 1-21 | First layer | Aluminum | 0.30 | 1.40 | 25.8 | 44.8 |
| | Second layer | Flame retardant UD tape (4 plies) | 1.1 | | | |

As shown in Table 6 above, it was confirmed that as the thickness of the metal layer or the unidirectional tape layer was increased, the weight was increased and the weight reduction rate was decreased compared to the reference steel.

In the cases of the composite laminates of Examples 1-16 to 1-19 manufactured including the unidirectional tape layer with different contents of the glass fiber, there was no significant difference in the thickness and weight of the composite laminates. In addition, in the cases of the composite laminates of Examples 1-20 and 1-21 manufactured including the unidirectional tape layer which does not include the flame retardant, there was no significant difference in the thickness and weight of the composite laminates.

TABLE 7

| Item | | Lamination structure | | | Weight (g) | Weight reduction rate (%) |
|---|---|---|---|---|---|---|
| | | Type | Thickness (mm) | | | |
| | | | Structure thickness | Actually measured thickness | | |
| Example 2-1 | First layer | Steel | 0.25 | 1.65 | 56.60 | -20.94 |
| | Second layer | Flame retardant UD tape (4 plies) | 1.1 | | | |
| | Third layer | Steel | 0.25 | | | |
| Example 2-2 | First layer | Steel | 0.30 | 1.73 | 64.40 | -37.61 |
| | Second layer | Flame retardant UD tape (4 plies) | 1.1 | | | |
| | Third layer | Steel | 0.30 | | | |
| Example 2-3 | First layer | Aluminum | 0.30 | 1.71 | 33.8 | 27.8 |
| | Second layer | Flame retardant UD tape (4 plies) | 1.1 | | | |
| | Third layer | Aluminum | 0.30 | | | |
| Example 24 | First layer | Aluminum | 0.30 | 1.88 | 39.2 | 16.2 |
| | Second layer | Flame retardant UD tape (4 plies) | 1.1 | | | |
| | Third layer | Aluminum | 0.50 | | | |

(continued)

| Item | | Lamination structure | | | Weight (g) | Weight reduction rate (%) |
|---|---|---|---|---|---|---|
| | | Type | Thickness (mm) | | | |
| | | | Structure thickness | Actually measured thickness | | |
| Example 2-5 | First layer | Aluminum | 0.50 | 2.03 | 44.6 | 4.70 |
| | Second layer | Flame retardant UD tape (4 plies) | 1.1 | | | |
| | Third layer | Aluminum | 0.50 | | | |

As shown in Table 7 above, the weight reduction was not possible when steel was used as the metal layer.

Description of Reference Numerals

100: Composite laminate

105: Continuous fiber layer

110: Unidirectional tape layer

115: Preliminary unidirectional tape layer

120: Metal layer

125: Preliminary metal layer

150: Adhesive layer

210: Mold

215: Molding part

300: Battery case

**Claims**

1.  A composite laminate comprising:

    a unidirectional tape layer (110) which comprises a thermoplastic resin and continuous fibers; and
    a first metal layer (121) formed on an upper surface of the unidirectional tape layer (110),
    wherein a content of the continuous fibers is 40% by weight or more based on a total weight of the unidirectional tape layer (110).

2.  The composite laminate according to claim 1, further comprising a second metal layer (122) formed on a lower surface opposite to the upper surface of the unidirectional tape layer (110).

3.  The composite laminate according to claims 1 or 2, wherein the content of the continuous fibers is 60% by weight or more is based on the total weight of the unidirectional tape layer (110).

4.  The composite laminate according to anyone of claims 1 to 3, wherein the thermoplastic resin further comprises a flame retardant.

5. The composite laminate according to anyone of claims 1 to 4, wherein the continuous fibers comprise one or more selected from the group consisting of carbon fibers, glass fibers and polypropylene fibers.

6. The composite laminate according to anyone of claims 1 to 5, wherein the unidirectional tape layer (110) comprises a plurality of continuous fiber layers including continuous fibers impregnated with the thermoplastic resin, and the unidirectional tape layer (110) comprises 2 layers or more of the continuous fiber layers.

7. The composite laminate according to claim 6, wherein the unidirectional tape layer (110) comprises 7 layers or less of the continuous fiber layers.

8. The composite laminate according to anyone of claims 1 to 7, wherein the unidirectional tape layer (110) has a thickness of 0.4 mm or more and 3.5 mm or less.

9. The composite laminate according to anyone of claims 1 to 8, wherein the first metal layer (121) is formed of one or more selected from the group consisting of aluminum, steel and an alloy thereof

10. The composite laminate according to anyone of claims 2 to 9, wherein the second metal layer (122) is formed of the same metal as the first metal layer (121).

11. The composite laminate according to anyone of claims 1 to 10, wherein an adhesive layer (150) is formed between the unidirectional tape layer (110) and the metal layer (120), wherein the adhesive layer (150) includes a polyolefin adhesive or a polypropylene adhesive.

12. The composite laminate according to anyone of claims 1 to 11, wherein a plurality of unidirectional tape layers (110) and a plurality of metal layers (120) are sequentially and alternately formed on top of each other with optional adhesive layers (150) included between the unidirectional tape layers (110) and the metal layers (120), wherein the metal layers (120) are included in an odd number within the composite laminate (100), wherein a first main surface of the composite laminate (100) is formed by one of the metal layers (120) and a second main surface of the composite laminate opposite (100) to the first main surface is formed by one of the unidirectional tape layers (110).

13. The composite laminate according to anyone of claims 2 to 12, wherein the second metal layer (122) has a thickness of 0.05 mm to 1.2 mm.

14. A battery case comprising the composite laminate according to anyone of claims 1 to 13.

15. A battery assembly comprising:

a plurality of battery cells stacked within a battery case; and
the battery case according to claim 14 formed to surround at least a portion of the plurality of laminated battery cells.

FIG. 1

100

120
110

FIG. 2

120
150
110

FIG. 3

121(120)
110
122(120)

FIG. 4

121(120)
151(150)
110
152(150)
122(120)

FIG. 5

121(120)

151(150)

111(110)

152(150)

122(120)

153(150)

112(110)

154(150)

FIG. 6A

105d(105)

105c(105)

105b(105)

105a(105)

FIG. 6B

105d(105)

105c(105)

105b(105)

105a(105)

FIG. 7

300

310

320b(320)

330

320a
(320)

FIG. 8A

110  120

FIG. 8B

120  110

FIG. 8C

FIG. 9

Europäisches
Patentamt

European
Patent Office

Office européen
des brevets

# EUROPEAN SEARCH REPORT

**Application Number**

EP 25 15 3008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/037633 A1 (DOWNS ROLAND JOSEPH [US] ET AL) 4 February 2016 (2016-02-04) * claims 1,2,6,11 * * paragraph [0003] * ----- | 1-15 | INV. B32B15/14 H01M50/124 H01M50/231 |
| A | CN 116 505 179 A (ZHEJIANG ALESSIO INTELLIGENT EQUIPMENT TECH CO LTD) 28 July 2023 (2023-07-28) * claim 1 * ----- | 1 | ADD. B32B5/26 B32B15/20 C08J5/24 |

TECHNICAL FIELDS
SEARCHED      (IPC)

B32B
H01M
C08J

The present search report has been drawn up for all claims

| Place of search | Date of completion of the search | Examiner |
|---|---|---|
| The Hague | 5 June 2025 | Hillebrand, Gerhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 3008

05-06-2025

| Patent document cited in search report | Publication date | Patent family member(s) | | Publication date |
|---|---|---|---|---|
| US 2016037633 A1 | 04-02-2016 | CA | 2906065 A1 | 02-10-2014 |
| | | CN | 105073411 A | 18-11-2015 |
| | | EP | 2969547 A1 | 20-01-2016 |
| | | JP | 2016517366 A | 16-06-2016 |
| | | KR | 20150128874 A | 18-11-2015 |
| | | US | 2016037633 A1 | 04-02-2016 |
| | | WO | 2014160498 A1 | 02-10-2014 |
| CN 116505179 A | 28-07-2023 | CN | 114374038 A | 19-04-2022 |
| | | CN | 116505179 A | 28-07-2023 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240021165